# EUROPEAN PATENT APPLICATION

(11) **EP 1 164 097 A1**
(43) Date of publication of application: **19.12.2001**
(21) Application number: 01113606.6
(22) Date of filing: 15.06.2001
(51) Int. Cl.: B65G 47/78, B65G 19/02

(54) **Device for advancing and rejecting blister packs**

(30) Priority: 16.06.2000 IT BO000358
(71) Applicant: MARCHESINI GROUP S.p.A., I-40065 Pian di Macina Pianoro (Bologna) (IT)
(72) Inventor: Monti, Giuseppe, 40065 Pianoro (Bologna) (IT)
(74) Representative: Dall'Olio, Giancarlo

(57) **Abstract**

A device (L) for advancing blister packs and removing defective blister packs includes a stationary running surface (P) defining the direction (Z), along which the blister packs (B) are transferred from first operative units to second operative units. Lug means (1) are equipped with dragging lugs (10), situated over the stationary running surface (P) and are aimed at pushing the blister packs (B) fed by the first operative units to the stationary running surface (P). Driving means (3) move the lug means (1) along the direction (Z), and consequently advance the blister packs (B) along the stationary running surface (P) toward the second operative units. A plurality of stations (5) are arranged along the stationary running surface (P) in the regions of gaps (6) made therein for removing the defective blister packs (B1).

## Description

The present invention relates to packaging of articles, e.g. tablets or pills, into relative blisters of a blister packs band, so as to obtain blister packs.

More in particular, the present invention relates to a conveying device for advancing blister packs, e.g. toward a packaging unit, and for rejecting defective blister packs.

There are known automatic units, so-called blistering machines, which allow to obtain blister packs, beginning from a reel of heat-formable material.

The blister packs leaving the blistering machine are conveyed to a packaging unit by a conveying device.

Some of blister packs leaving the blistering unit may be defective.

The blister packs can present various disadvantages such as: one or more of the blister receptacles are empty or some tablets are chipped or crumbled, the welding between the heat-formable band, containing the blisters, and the sealing band, can be defective, etc.

Therefore, it is necessary to avoid undue forwarding to the marketplace of defective blister packs.

For this purpose, suitable working means for removing defective blister packs from the conveying device must be situated therealong, downstream of the blistering unit and upstream of the packaging unit.

Currently used conveying devices convey the blister packs on a conveying band which runs bringing along the blister packs.

The conveying band is equipped with open-ended holders or similar holding elements, regularly spaced apart, which receive blister packs.

Consequently, the blister packs are moved together with the conveying device, which creates problems when defective blister packs are to be removed.

In case of intermittent conveying device, i.e. the device moving stepwise, there must be suitable stations, situated beside the conveying device and equipped with operating means which abut crosswise against the defective blister packs and remove them during a device dwelling step.

Then, the same operating means lead the removed defective blister packs into the collecting units.

Thus, it is necessary to equip the conveying device, already while designing it, with suitable zones for receiving the operating means and the stations collecting defective blister packs.

In case of conveying device moving in a continuous way, there are serious problems both during the design during production of the operating means for removing the defective blister packs.

Actually, the above operating means must be capable of following, during the conveying belt forward movement, the defective blister packs situated thereon, and removing them therefrom without interfering with the belt movement.

The above operations are difficult and not always they can be performed without drawbacks.

The main object of the present invention is to propose a device, which outweighs the disadvantages present in the prior art, and particularly, advances blister packs, either intermittently or continuously, and simultaneously removes defective blister packs.

Another object of the present invention is to propose a device which allows to advance blister packs independently from the support and running surface condition.

A further object of the present invention is to propose a device for advancing blister packs, which removes defective blister packs acting in the same direction of the blister packs advancing movement.

A still further object of the present invention is to propose a device for advancing blister packs and removing defective ones, which is obtained by a simple and extremely functional technical solution.

Moreover, it is intended that the proposed device ensures high reliability and functionality standards during blister packs advancing, as well as during removing of defective blister packs.

The above mentioned objects are achieved by the features of the independent claim, while preferred features are defined in the dependent claims.

The invention will now be described in more detail with reference to particular, non-limiting embodiments and with reference to the accompanying drawings, in which:
- Figures 1a and 1b are schematic lateral views of the proposed device, in two different operating steps, i.e. during blister packs advancing movement and during removal of defective blister packs, respectively;
- Figure 2 is a section view, taken along A - A of Figure 1, indicating with broken line a defective blister pack removed from the conveying device.

With reference to the enclosed drawings, the reference letter L indicates the proposed device for advancing blister packs B.

The device L can be situated e.g. between a blistering unit and a packaging unit.

The device L includes a stationary running surface, indicated with P, on which the advancing direction Z is defined for the blister packs B, from the blistering unit to the packaging unit.

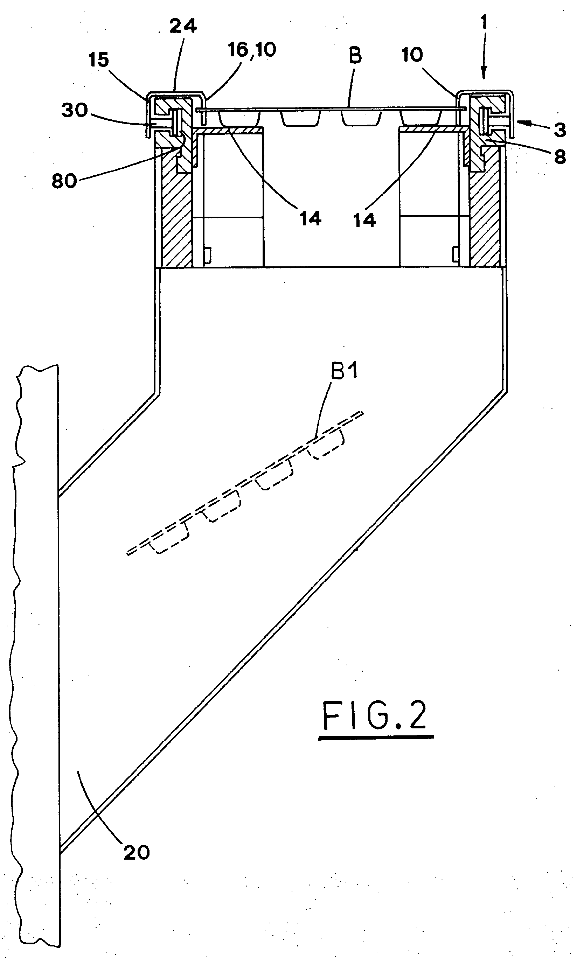

The stationary running surface P can be formed by a unique support surface, or it can be formed, as shown for instance in Figure 2, by two separate support surfaces 14, parallel to each other and situated at the same level.

The device L includes guiding tracks 8, situated beside said stationary running surface P and extending parallel thereto in the direction Z.

The guiding tracks 8 are equipped with seats 80 for receiving sliding driving means 3, which are formed as shown in Figure 2, e.g. by chains 30.

Lug means 1, fastened to the above driving means 3, include dragging lugs 10, extending over the stationary running surface P, so as to push blister packs B being moved, fed thereto by the blistering unit.

For this purpose, as shown in Figures, the lug means 1 have an overturned "U" shape.

In particular, the base 24 of the above mentioned overturned "U" is situated over the guiding tracks 8 and parallel thereto and can be moved with respect thereto.

The first arm 15 of the overturned "U" is fastened to the chains 30 of the driving means 3, while the second arm 16 of the overturned "U" forms the above mentioned dragging lugs 10.

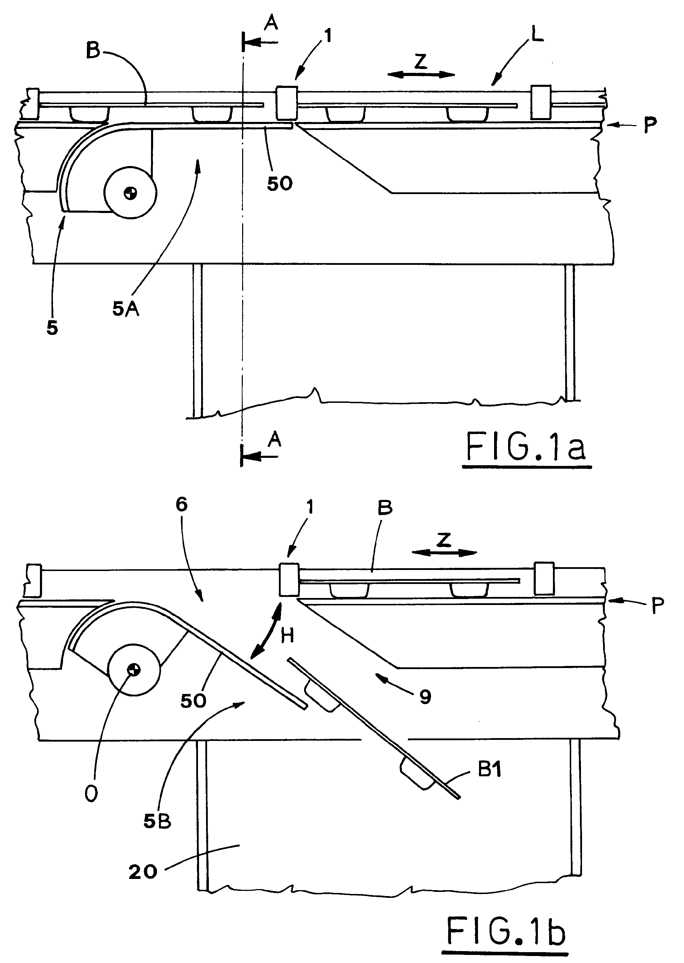

A plurality of stations 5, only one of which has been shown in the drawings, are situated along the stationary running surface P of the device L and each of them is inserted into corresponding gaps 6 of the surface P, so as to remove and reject the defective blister packs B1 (Figure 1a, 1b).

Each of the stations 5 can be adapted to a particular type of defective blister packs, for example one of the stations can remove packs with empty blisters, another one can remove packs with incomplete welding between the heat-formable band and the sealing band, etc.

Each of the stations 5 include a support surface 50, hinged to and rotating on a support spindle O, oriented crosswise and situated beneath the stationary running surface P of the device L.

In a first working configuration 5A, shown in Figure 1a, the support surface 50 is coplanar with the stationary running surface P, thus, in this configuration 5A the support surface 50 closes the gaps 6 allowing the blister packs B to continue the advancing motion in the direction Z.

In a second working configuration 5B, shown in Figure 1b, the support surface 50 opens with respect to the stationary running surface P by an angle H. In this second working configuration 5B, the support surface 50 defines outlet mouths 9 in the regions of the gaps 6 of the stationary running surface P, so that the defective blister packs B1 can be rejected.

Suitable collecting units 20 for defective blister packs B1 removed from the device L are situated under the stationary running surface P, in correspondence to the gaps 6.

The operation of the proposed device for advancing blister packs and for removing defective blister packs will be described now.

A general advancing step of the blister packs coming from the blistering unit and moved toward the packaging unit.

The stations 5 are in the first working configuration 5a (Figure 1a), thus the support surfaces 50 are coplanar with the stationary running surface P.

The driving means 3 slide along the seats 80 of the guiding tracks 8 and drive the lug means 1 along the stationary running surface P along the direction Z towards the packaging unit.

This way, the dragging lugs 10 of the lug means 1 are moved along the stationary running surface P in the direction Z and push the blister packs, fed to the stationary running surface P by the blistering unit, situated upstream of the device L.

Thus, the dragging lugs 10 drag the blister packs B along the stationary running surface P and move them toward the packaging unit situated downstream of the device L.

If a defective blister pack B1 is detected at the outlet of the blistering unit, when the defective blister pack B1 pass through the station 5, the support surface 50 of the station 5 is operated be the conveying device L.

Consequently, the support surface 50 rotates on the support spindle O and describes an angle H, thus opening the outlet mouth 9 and reaching the second working configuration 5B (Figure 1b).

In this way, the defective blister pack B1, which in the meantime has reached the station 5, due to the gravity, falls into the outlet mouth 9 and is brought into the defective blister packs collecting unit 20.

In phase relation with the fall of the defective blister pack B1, the support surface 50 is brought back to its first working configuration 5A, so as to allow subsequent blister packs to regularly advance along the stationary running surface P.

Consequently, the proposed device allows in an extremely advantageous way, to advance the blister packs leaving a first operative unit toward a second operative unit, making the movement of the blister packs independent from the movement of the support and running surface.

This advantageously allows to prepare suitable stations for removing defective blister packs along the blister packs running surface.

The proposed conveying device for advancing blister packs and for removing defective packs is extremely compact and functional, it requires reduced working space, which is advantageous for plant logistic layout.

It is also to be pointed out that the conveying device proposed by the present invention is universal, as it can be adapted and prepared for each working need: for continuous or stepwise forward movement of the blister packs, at any speed and for any size of the blister packs.

Moreover, it is to be pointed out that the proposed device is obtained by a simple technical solution, including few and simple elements, which results in low production costs.

It is still to be noted, that the proposed device assures high reliability and functionality standards during the blister packs advancing movement, as well as during removing of defective blister packs.

## Claims

1. Device for advancing blister packs and for removing defective blister packs **characterized in that** it includes: a stationary running surface (P), along which said blister packs (B) are transferred in an advancing direction (Z) from first operative units to second operative units; lug means (1) equipped with dragging lugs (10), situated over said stationary running surface (P) and aimed at pushing said blister packs (B) fed by said first operative units to said stationary running surface (P); driving means (3) for moving said lug means (1) along said direction (Z), thus advancing said blister packs (B) along said stationary running surface (P) toward said second operative units; and a plurality of stations (5), arranged along said stationary running surface (P) in the regions of gaps (6) made therein for removing the defective blister packs (B1).

2. Device, according to claim 1, **characterized in that** said stations (5) are operated with movements between two distinct working configurations first configuration (5A), in which said gaps (6) are closed and in which the support surface (50) of said stations (5) is coplanar with said stationary running surface (P) thus allowing said blister packs (B) to move along said direction (Z), and a second configuration (5B), in which outlet mouths (9) are opened in the regions of said gaps (6) of said support surface (50) for removing said defective blister packs (B1), so as to convey said defective blister packs (B1) toward a unit (20) for collecting removed blister packs, situated beneath the stationary running surface (P).

3. Device, according to claim 2, **characterized in that** said support surface (50) of said stations (5) is hinged to and rotating on a support spindle (O), oriented crosswise and situated beneath the stationary running surface P of the device L.

4. Device, according to claims 2 and 3, **characterized in that** during the transfer from said first working configuration (5A) to said second working configuration (5B), said support surface (50) describes an aperture angle (H) with respect to said stationary running surface (P), so as to define said outlet mouths (9).

5. Device, according to claim 1, **characterized in that** said stationary running surface (P) includes a unique support and running surface.

6. Device, according to claim 1, **characterized in that** said stationary running surface (P) includes more support and running surfaces (14), separate and parallel to each other.

7. Device, according to claim 1, **characterized in that** said driving means (3) slide in guiding tracks (8) situated beside said stationary running surface (P) along said moving direction (Z).

8. Device, according to claim 1 and 7, **characterized in that** said driving means (3) include chains (30) received by seats (80) defined by said guiding tracks (8).

9. Device, according to any of previous claims, **characterized in that** said lug means (1) have an overturned "U" shape, with the base (24) of said overturned "U" going in abutment against the upper part of said tracks (8) and with a first arm (15) of said overturned "U" being fastened to said driving means (3) and with a second arm (16) of said overturned "U" defining said dragging lugs (10).

10. Device, according to any of previous claims, **characterized in that** the motion of said lug means (1) along said stationary running surface (P) is continuous.

11. Device, according to any of previous claims, **characterized in that** the motion of said lug means (1) along said stationary running surface (P) is stepwise.
